# EUROPÄISCHE PATENTSCHRIFT

(11) **EP 1 846 879 B1**
(45) Veröffentlichungstag und Bekanntmachung des Hinweises auf die Patenterteilung: **16.11.2011**
(21) Anmeldenummer: 05814630.9
(22) Anmeldetag: 02.12.2005
(51) Int. Cl.: G06Q 10/00

(54) **VERFAHREN ZUR VISUALISIERUNG EINES BEARBEITUNGSSTATUS EINES AUFTRAGS**
METHOD FOR VISUALISATION OF A PROCESSING STATUS FOR A TASK
PROCEDE POUR VISUALISER UN ETAT DE TRAITEMENT D'UNE TACHE

(30) Priorität: 21.12.2004 DE 102004062785
(43) Veröffentlichungstag der Anmeldung: 24.10.2007
(73) Patentinhaber: Hiflex Software GesmbH, 1090 Wien (AT)
(72) Erfinder: REICHHART, Thomas, 52457 Aldenhoven (DE)
(74) Vertreter: Bauer, Dirk
(86) Internationale Anmeldenummer: PCT/EP2005/012894
(87) Internationale Veröffentlichungsnummer: WO 2006/066708

(56) Entgegenhaltungen:
- Harvey, James: "JDF: Where to Begin", , 2002, pages 1-18, Retrieved from the Internet: URL:http://www.media4theworld.com/Papers/J DF_where_to_begin.pdf [retrieved on 2010-12-07]
- CIP4 ORGANIZATION: "JDF Specification Release 1.1", JDF SPECIFICATION RELEASE 1.1,, no. chapter 1-5, 30 April 2002 (2002-04-30), pages 1-172, XP007916247,
- Harvey, James: "JDF: Where to Begin", , 2002, pages 1-18, Retrieved from the Internet: URL:http://www.media4theworld.com/Papers/J DF_where_to_begin.pdf [retrieved on 2010-12-07]
- CIP4 ORGANIZATION: "JDF Specification Release 1.1", JDF SPECIFICATION RELEASE 1.1,, no. chapter 1-5, 30 April 2002 (2002-04-30), pages 1-172, XP007916247,

## Beschreibung

Die Erfindung betrifft ein Verfahren zur Visualisierung eines Bearbeitungsstatus eines Auftrags, wobei der Auftrag von einem Management Information System erteilt und bei einem ausführenden System ausgeführt wird und wobei auf den Auftrag bezogene Statusmeldungen im Job Definition Format von dem ausführenden System an das Management Information System übermittelt und beim Management Information System eingehende Statusmeldungen abgelegt werden.

Das Job Definition Format "JDF" (und das Job Messaging Format "JMF" als Untermenge von JDF) sind allgemein bekannte, vom Konsortium "International Cooperation for the Integration of Processes in Prepress, Press and Postpress" ("CIP4-Konsortium", www.cip4.org) entwickelte und gepflegte Datenformate. Der Entwicklung von JDF liegt die Zielvorstellung zugrunde, im Rahmen einer vernetzten grafischen Produktion für alle Produktionsmöglichkeiten und Eventualitäten flexibel und ohne Einschränkungen die Kommunikation zwischen Druckerei, Designer, Werbeagentur, Auftraggeber von Drucksachen und Unterlieferanten von Auftragnehmern zu vereinheitlichen.

JDF basiert auf der Extensible Markup Language "XML", einer gleichfalls allgemein bekannten, vom World Wide Web Consortium ("W3C", www.w3.org) entwickelten Metasprache zum Definieren von Dokumenttypen und soll nach der Intention des CIP4-Konsortiums nicht nur in allen Produktionsbereichen einer vernetzten Druckerei, insbesondere in Vertrieb, Kalkulation und Auftragsbearbeitung, Produktionsplanung und - steuerung, in der eigentlichen Produktion in Vorstufe, Druck, Druckweiterverarbeitung und Versand, in den Querschnittsbereichen Material- und Lagerwirtschaft, Finanz- und Lohnbuchhaltung, Controlling, Kostenrechnung und Qualitätssicherung als einheitliches Datenformat zur Beschreibung von Prozessen und Produkten dienen.

Durch vertikale Integration von Daten einerseits des Produktionsprozesses und andererseits der kaufmännischen Bereiche soll JDF in einer verständlichen und durchgängigen Datenstruktur eine hohe Transparenz aller Produktionsabläufe, eine standardisierte Dokumentation der relevanten Soll- und Istdaten und eine durchgängige Produktionssteuerung ermöglichen. Insbesondere soll ein Auftrag in JDF nur noch ein einziges Mal in einer Form beschrieben werden, die auch in der externen Kommunikation sowohl mit Endkunden als auch mit Unterauftragnehmern und deren ausführenden Systemen in der Mensch-Maschine- und Maschine-Maschine-Kommunikation über Sprach- und Plattformgrenzen hinweg alle Prozessteilneluner verstehen.

Entgegen der Philosophie des CIP4-Konsortiums und der darauf basierenden Konzeption von JDF bestehen im realen Betrieb vernetzter Druckereien vielfältige Restriktionen und spezifische Unterschiede bezüglich der Informationen, die die einzelnen Prozessteilnehmer benötigen, verwenden oder auch nur verstehen. Insbesondere die Visualisierung des Bearbeitungsstatus eines Auftrags in einem Management Information System stellt hohe Anforderungen an Auswahl und Strukturierung der darzustellenden Informationen.

Beispielsweise sollte das Management Information System im Sinne einer ergonomischen Softwaregestaltung für jeden Arbeitsplatz abhängig von dessen Aufgabengebiet (zum Beispiel Maschinensteuerung, Ablauflcontrolle, Lagerhaltung, Qualitätssicherung, Vertrieb oder Nachkalkulation) eine spezifische Sicht auf den Bearbeitungsstatus bereitstellen, die einerseits nur die und andererseits alle für dieses Aufgabengebiet erforderlichen Informationen bereitstellt. Außerdem sollte diese Sicht die Informationen derart strukturiert darstellen, dass sie dem jeweiligen Mitarbeiter - auch unter Berücksichtigung von dessen Ausbildungs- und Wissensstand - ein intuitives Erfassen des Bearbeitungsstatus und somit kurze Bearbeitungszeiten, insbesondere schnelle Reaktionen in Problemsituationen ermöglicht

Harvey gibt in "Harvey, James: JDF: Where to Begin,2002, Seiten 1-18, URL: http://www.media4thewortd.com/Papers/JDF_where_to_begin.pdf eine Einführung in das Job Definition Format und beschreibt unter anderem die Nutzung dieses Formats in einem vernetzten Drucksystem, wobei ausführende Systeme Statusmeldungen an das Management Infomation System übermitteln. Hierbei werden JDF Dokumente mit Hilfe von Parsern ausgewertet und die ermittelten Daten in einer Datenbank des Management Information Systems gespeichert.

In der JDF Spezifikation "CIP4 ORGANIZATION: JDF Specification Release 1.1, 30. April 2002 (2002-04-30), URL: http://www.cip4.org/documents/jdf_specifications/index.html" wird ebenfalls ein vernetztes Drucksystem mit Management Information System und ausführenden Systemen dargestellt. Ferner wird die Verwendung von XML Parsern erwähnt, um Daten aus JDF Dokumentinstanzen zu extrahieren und in Datenbanken abzulegen bzw. an das Management Information System zu übergeben.

### Aufgabe

Der Erfindung liegt die Aufgabe zugrunde, ein Verfahren der einleitend genannten Art vorzuschlagen, das einfache Handhabung und Administration mit einer hohen Zuverlässigkeit und zugleich einer hohen Flexibilität in Bezug auf geänderte Anforderungsprofile kombiniert.

### Lösung

Es wird ein Verfahren und eine Desktopanwendung nach den unabhängigen Ansprüchen 1 und 5 vorgeschlagen.

Nach der Erfindung wird vorgeschlagen, dass der Bearbeitungsstatus für jede Visualisierung mittels eines Parsers aus den abgelegten Statusmeldungen "on the fly" ermittelt wird. Das erfindungsgemäße Verfahren erfordert damit keine Interpretation der beim Management Information System eingehenden Statusmeldung. Mit der Reduktion auf die Ablage in der ursprünglichen, eingehenden Form - insbesondere in Form einer JDF/JMF-Datei - wird der Initialaufwand zur Verwaltung eingehender Statusmeldungen minimalisiert.

Auf Seiten des Management Information System kann zur Implementierung des erfindungsgemäßen Verfahrens beispielsweise ein einfacher Proxyserver JMF-Statusmeldungen, die über das "HyperText Transfer Protocol" (HTTP) - oder über ein anderes Kommunikationsschema, mittels dessen Dateien von einem Computer auf einen anderen übertragbar sind - entgegennehmen und ablegen.

Da die Interpretation der abgelegten Statusmeldungen im Rahmen des erfindungsgemäßen Verfahrens erst unmittelbar bei der Darstellung des Bearbeitungsstatus erfolgt, kann diese Funktionalität von der Entgegennahme und Ablage der Statusmeldungen (im Beispiel durch den Proxyserver) programmtechnisch vollständig entkoppelt werden. Für die Entgegennahme der Statusmeldungen wie für die Darstellung des Bearbeitungsstatus muss lediglich der Ort der Ablage verfügbar und die Form der Ablage als Schnittstellendefinition bekannt sein. Durch die Ermöglichung einer modularen Betriebsweise zeichnet sich das erfindungsgemäße Verfahren einerseits durch eine hohe Flexibilität, andererseits durch eine hohe Zuverlässigkeit aus.

Nach dem erfindungsgemäßen Verfahren werden die eingehenden Statusmeldungen mittels eines Parsers in Kategorien eingeteilt und entsprechend geordnet abgelegt. Auf diese Weise wird die Handhabung einer großen Zahl eingehender Statusmeldungen vereinfacht.

Werden die eingehenden Statusmeldungen durch das für die Entgegennahme und Ablage der Statusmeldungen zuständige Modul an einem ersten Ablageort - im Sinne eines Cache - zwischengespeichert, so kann auch die Kategorisierung der eingehenden Statusmeldungen wiederum als separates Modul ausgeführt werden. Bei einem Ausfall des Moduls für die Kategorisierung ist dann die Entgegennahme und Ablage der Statusmeldungen nicht beeinträchtigt. Auch die Darstellung des Bearbeitungsstatus bleibt funktionstüchtig (stellt aber gegebenen Falls vorübergehend einen veralteten Status dar). In einer besonders einfachen Implementation des erfindungsgemäßen Verfahrens werden die Statusmeldungen in einem überwachten Bereich abgelegt. Beispielsweise können die eingehenden Statusmeldungen als JDF/JMF-Dateien in einem oder mehreren "Hotfoldern" abgelegt werden, deren Inhalt im Rahmen des Management Information System zur Aktivierung des jeweils nächsten Bearbeitungsschritts von jeweils einer im Hintergrund laufenden Anwendung, einem so genannten "disk and execution monitor" (in Workstation-Betriebssystemen zumeist als "Daemon", unter PC-Betriebssystemen als "Dienst" bezeichnet) auf Änderungen überwacht wird. Die Ablage einer neu eingegangenen Statusmeldung durch einen Proxyserver in einem Cache in einem solchen überwachten Bereich kann dann beispielsweise den Start des Moduls zur Kategorisierung triggern, die Ablage einer kategorisierten Statusmeldung kann entsprechend eine aktualisierte Visualisierung triggern.

Die Ablage der Statusmeldungen in einem Dateisystem stellt eine besonders einfache Implementation einer Datenbankstruktur dar. Alternativ ist grundsätzlich auch die Verwendung anderer Formen von Datenbanken möglich.

Im Rahmen eines erfindungsgemäßen Verfahrens kann ein Bearbeitungsstatus durch eine spezifisch für diesen definierte Bezeichnung visualisiert werden. Einerseits sind die im Rahmen der Statusmeldungen von den verschiedenen bekannten ausführenden System verwendeten Schlüsselwörter auch bei identischer Bedeutung nicht einheitlich, andererseits können auch verschiedene Schlüsselwörter und Codes im Rahmen einer bearbeiterspezifischen Sicht dieselbe Bedeutung haben. Beispielsweise kann für eine kalkulatorische Statistik der Auslastung eines ausführenden Systems Umrüstung, Stromausfall, Wartung und Schichtwechsel pauschal unter die Bezeichnung "Stillstand" gefasst werden.

Darüber hinaus kann ein Bearbeitungsstatus aus einer bearbeiterspezifischen Sicht auch erst erreicht sein, wenn mehrere Statusmeldungen jeweils einen definierten Wert erreichen. Beispielsweise kann aus Sicht der Produktionsleitung ein Teilauftrag erst dann ausgeführt werden, wenn er vollständig definiert, das vorgesehene ausführende System betriebsbereit und das entsprechende Vorprodukt fertig und angeliefert ist.

Im Rahmen eines erfindungsgemäßen Verfahrens kann ein Bearbeitungsstatus außerdem durch eine spezifisch für diesen definierte Farbe visualisiert werden. Insbesondere die Verwendung von aus anderem Kontext allgemein bekannten Signalfarben - beispielsweise grün für "startbereit" oder "freigegeben", gelb für "warte auf eine Eingabe", rot für "angehalten", blinkend für "kritischer Fehler" - erleichtert die intuitive Erfassung des Bearbeitungsstatus.

### Ausführungsbeispiel

Die Erfindung wird nachfolgend anhand eines Ausführungsbeispiels erläutert. Es zeigen
Fig. 1 eine Liste von Feldern und zugeordneten Verzeichnisnamen,
Fig. 2 eine Liste von Feldinhalten und zugeordneten Bezeichnern,
Fig. 3 eine Liste von Feldinhalten und zugeordneten Bezeichnern und Signalfarben.
Fig. 4 eine Liste von XPATH-Abfragen und zugeordneten Bezeichnern und
Fig. 5 eine Liste von Bezeichnern für Tabellen und zugeordnete JDF-Feldinhalte.

Im Rahmen eines Management Information System in einer vernetzten Druckerei wird der Bearbeitungsstatus der Aufträge durch eine in Java implementierte Desktopanwendung auf verteilten Arbeitsplatzrechmern mit unterschiedlichen Unix- oder PC-Betriebssystemen visualisiert.

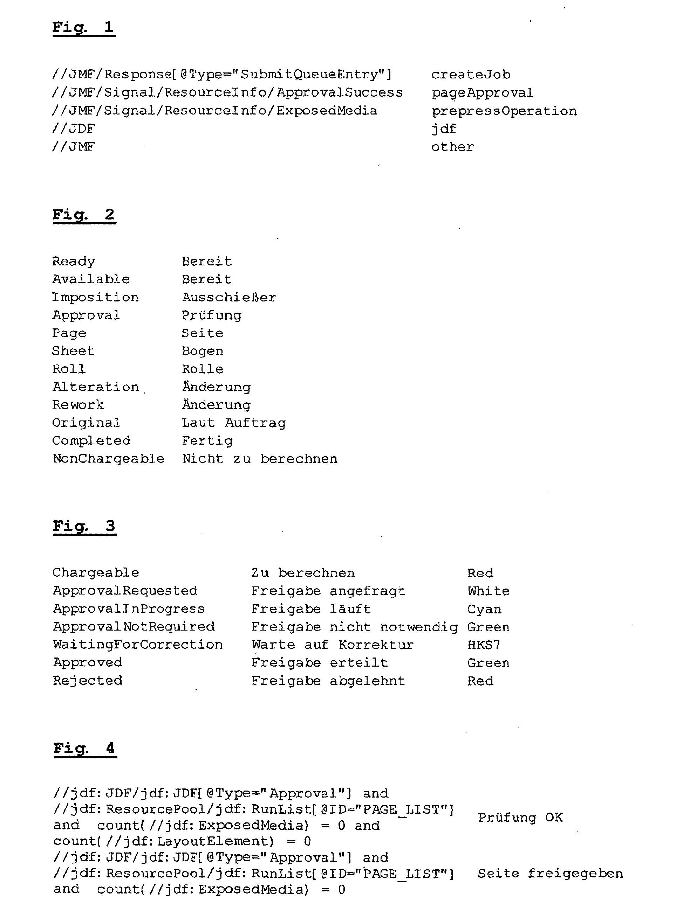

Die an das Management Information System angeschlossenen ausführenden Systeme senden JMF-Statusmeldungen über HTTP an einen Proxyserver, der diese in einem speziellen Verzeichnisbaum auf einem Dateiserver ablegt. In den Proxyserver ist ein Modul integriert, das die eingehenden Statusmeldungen anhand von spezifizierten XML-Feldern nach Teilaufträgen und -prozessen kategorisiert und die Ablage in spezifizierten Verzeichnissen in dem Verzeichnisbaum initiiert. Die Felder und die zugeordneten Verzeichnisse sind in einer Konfigurationsdatei gemäß der Tabelle in Figur 1 spezifiziert. Das Modul zur Kategorisierung der eingehenden Statusmeldungen arbeitet die Zeilen dieser Tabelle solange nacheinander ab, bis eines der spezifizierten Felder gefunden wird.

Beim Start der Desktopanwendung auf einem Arbeitsplatz werden abhängig von der Aufgabenstellung des jeweiligen Arbeitsplatzes oder des angemeldeten Bearbeiters verschiedene Verzeichnisse auf einem zentralen Server ausgelesen. Liegt in einem Verzeichnis eine Datei, so wird diese in Abhängigkeit von dem jeweiligen Verzeichnis und von der Aufgabenstellung wiederum mittels eines Parsers auf spezifizierte Feldinhalte geprüft. Die Feldinhalte sind in der Konfigurationsdatei gemäß den Tabellen in den Figuren 2 und 3 beispielhaft spezifiziert.

Die Statusmeldungen aus einem ausgelesenen Verzeichnis werden in der Desktopanwendung jeweils tabellenförmig für den jeweiligen Teilauftrag oder -prozess in chronologischer Folge aufgelistet, wobei für jede Statusmeldung der für den ermittelten Feldinhalt spezifizierte Bezeichner und gegebenen Falls eine spezifizierte Signalfarbe für den Status dargestellt wird. Die Bezeichner und Signalfarben sind in der Konfigurationsdatei gemäß den Tabellen in den Figuren 2 und 3 beispielhaft spezifiziert.

In der Konfigurationsdatei sind gemäß der Tabelle in Figur 4 in der XML Path Language ("XPATH", www.w3.org/TR/xpath) Bedingungen auf einer Mehrzahl von XML-Feldern spezifiziert. XPATH und die darauf basierende XML Query Language ("XQuery", www.w3.org/TR/xquery) sind Standardformate zur Definition von Abfragen auf Daten im XML-Format. Wenn eine dieser Bedingungen erfüllt ist, wird der Bearbeitungsstatus in der Desktopanwendung mit dem in der rechten Spalte der Tabelle aufgeführten Bezeichner dargestellt.

In der Desktopanwendung werden die für die Aufgabenstellung spezifizierten Teilaufträge und -prozesse jeweils in getrennten Tabellen gemeinsam auf einem Bildschirm oder bei Bedarf auf mehreren Bildschirmseiten dargestellt.

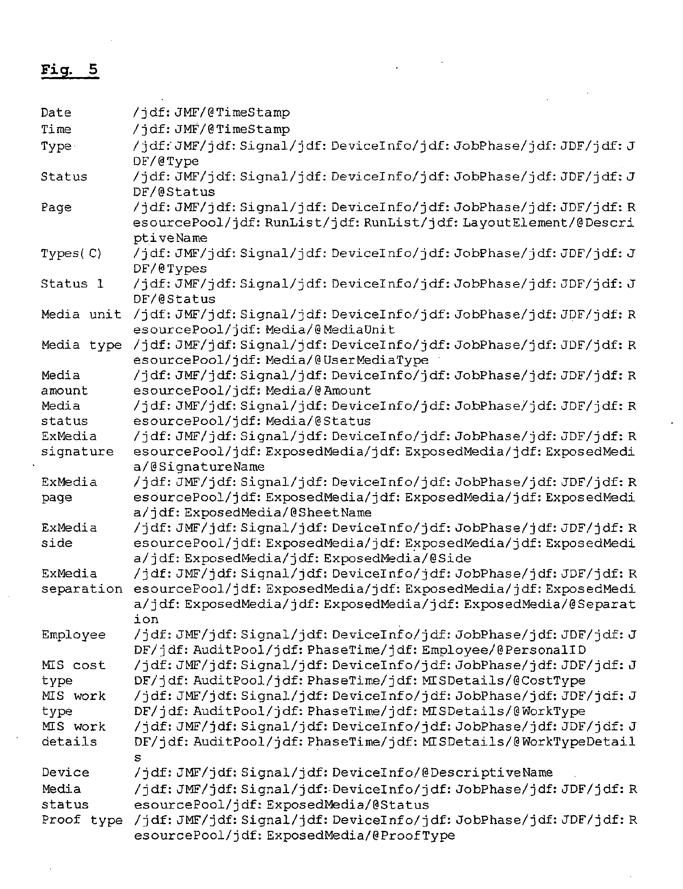

In der Konfigurationsdatei sind gemäß der Tabelle in Figur 5 für Spalten derartiger Tabellen in der Desktopanwendung Bezeichner und darzustellende XML-Feldinhalte spezifiziert.

Beim Start der Desktopanwendung werden Hintergrundprozesse gestartet, die die Verzeichnisse auf dem Server auf Veränderungen - also auf neu eingehende Statusmeldungen - überwachen. Wird in einem der überwachten Verzeichnisse von dem Proxyserver eine neue Statusmeldung abgelegt, so triggert der entsprechende Hintergrundprozess in der Desktopanwendung das Lesen dieser neuen Statusmeldung und die Aktualisierung der Visualisierung des Bearbeitungsstatus des betreffenden Teilauftrags oder -prozesses.

Dadurch, dass die Statusmeldungen für die Visualisierung in der Desktopanwendung jeweils "on the fly" ausgewertet werden, ist die Implementierung einer speziellen Datenstruktur für den Bearbeitungsstatus in dem Management Information System nicht erforderlich. Durch Änderung der in den Tabellen 1 bis 3 abgelegten Informationen kann die Visualisierung des Bearbeitungsstatus auf einfache Weise beispielsweise an ein neu angeschlossenes ausführendes System oder an neue Anforderungen bezüglich Visualisierung angepasst werden.

## Patentansprüche

1. Verfahren zur Visualisierung eines Bearbeitungsstatus eines Auftrags mittels einer Desktopanwendung, wobei der Auftrag von einem Management Information System erteilt und bei einem ausführenden System ausgeführt wird und wobei auf den Auftrag bezogene Statusmeldungen im Job Definition Format von dem ausführenden System an das Management Information System übermittelt und beim Management Information System eingehende Statusmeldungen abgelegt werden, **dadurch gekennzeichnet, dass**
der Bearbeitungsstatus für jede Visualisierung mittels eines Parsers aus den abgelegten Statusmeldungen "on the fly" ermittelt wird,
wobei die eingehenden Statusmeldungen mittels eines Parsers in Kategorien eingeteilt und in spezifizierten Verzeichnissen entsprechend geordnet abgelegt werden und
wobei beim Start der Desktopanwendung abhängig von einer Aufgabenstellung eines jeweiligen Arbeitsplatzes oder eines angemeldeten Bearbeiters verschiedene der Verzeichnisse ausgelesen werden und
ein Parser die Statusmeldungen in den verschiedenen Verzeichnissen auf Feldinhalte prüft, die den Bearbeitungsstatus definieren und die Desktopanwendung den Bearbeitungsstatus visualisiert.

2. Verfahren nach dem vorgenannten Anspruch, ***dadurch gekennzeichnet, dass*** die Statusmeldungen in einem überwachten Bereich abgelegt werden.

3. Verfahren nach einem der vorgenannten Ansprüche, ***dadurch gekennzeichnet, dass*** ein Bearbeitungsstatus durch eine spezifisch für diesen definierte Bezeichnung visualisiert wird.

4. Verfahren nach einem der vorgenannten Ansprüche, ***dadurch gekennzeichnet, dass*** ein Bearbeitungsstatus durch eine spezifisch für diesen definierte Farbe visualisiert wird.

5. Desktopanwendung zur Visualisierung eines Bearbeitungsstatus eines Auftrags, wobei der Auftrag von einem Management Information System erteilt und bei einem ausführenden System ausgeführt wird, ***dadurch gekennzeichnet, dass*** der Bearbeitungsstatus gemäß einem Verfahren nach einem der vorgenannten Ansprüche visualisiert wird.

## Claims

1. A method for visualising a processing status of a task by means of a desktop application, wherein the task is placed by a management information system and executed on an executing system, and whereby status messages related to the task are transmitted in a job definition format from the executing system to the management information system, and incoming status messages are filed in the management information system, **characterised in that**
the processing status for each visualisation is ascertained "on the fly" by means of a parser from the filed status messages,
wherein the incoming status messages are divided into categories by means of a parser and are filed in specified directories in corresponding order, and
wherein, at the start of the desktop application, depending upon a job description of a respective work place or a registered processor some of the directories are read out, and
a parser checks the status messages in the various directories for their field contents, which define the processing status, and the desktop application visualises the processing status.

2. Method according to the above mentioned claim, **characterised in that** the status messages are filed in a monitored area.

3. Method according to one of the above mentioned claims, **characterised in that** a processing status is visualised by a name specifically defined for the same.

4. Method according to one of the above mentioned claims, **characterised in that** a processing status is visualised by a colour specifically defined for the same.

5. A desktop application for visualising a processing status of a task, wherein the task is placed by a management information system and executed on an executing system, **characterised in that** the processing status is visualised by a method according to one of the above mentioned claims.

## Revendications

1. Procédé pour visualiser un état de traitement d'une tâche au moyen d'une application desktop, la tâche étant délivrée par un système d'information de gestion et étant exécutée dans le cadre d'un système exécutant et des messages d'état spécifiques à la tâche étant transmis dans le format job définition par le système exécutant au système d'information de gestion et des messages d'état arrivant étant déposés sur le système d'information de gestion, **caractérisé en ce que**
l'état de traitement est déterminé "on the fly" (à la demande) pour chaque visualisation au moyen d'un programme d'analyse syntaxique à partir des messages d'état déposés,
les messages d'état arrivant étant répartis en catégories au moyen d'un programme d'analyse syntaxique et étant déposés en conséquence de façon ordonnée dans des répertoires spécifiés et
certains des répertoires étant lus lors du démarrage de l'application desktop en fonction d'une définition de tâche d'un poste de travail spécifique ou d'un responsable du traitement demandé et
un programme d'analyse syntaxique vérifiant les messages d'état dans les différents répertoires au niveau des contenus de champ qui définissent l'état de traitement et l'application desktop visualisant l'état de traitement.

2. Procédé selon la revendication précédente, **caractérisé en ce que** les messages d'état sont déposés dans une zone surveillée.

3. Procédé selon l'une des revendications précédentes, **caractérisé en ce qu'**un état de traitement est visualisé par une désignation définie de façon spécifique pour celui-ci.

4. Procédé selon l'une des revendications précédentes, **caractérisé en ce qu'**un état de traitement est visualisé par une couleur définie de façon spécifique pour celui-ci.

5. Application desktop pour la visualisation d'un état de traitement d'une tâche, la tâche étant délivrée par un système d'information de gestion et étant mise en oeuvre sur un système exécutant, **caractérisé en ce que** l'état de traitement est visualisé selon un procédé selon l'une des revendications précédentes.
